# EUROPÄISCHE PATENTANMELDUNG

(11) **EP 1 561 676 A1**
(43) Veröffentlichungstag der Anmeldung: **10.08.2005**
(21) Anmeldenummer: 05000876.2
(22) Anmeldetag: 18.01.2005
(51) Int. Cl.: B62D 35/00

(54) **Vorrichtung zur strömungsoptimierten Ausrichtung eines Luftleitkörpers**

(30) Priorität: 05.02.2004 DE 102004005596
(71) Anmelder: DaimlerChrysler AG, 70567 Stuttgart (DE)
(72) Erfinder: Frank, Thorsten, 71134 Aidlingen (DE); Kramb, Stephan, 73773 Aichwald (DE); Schuller, Karl-Heinz, 71134 Aidlingen (DE); Vahl, Uwe, 71296 Heimsheim (DE)

(57) **Zusammenfassung**

Der Luftleitkörper leitet den Luftfluss (6) zwischen einer Zugmaschine (1) und einer in Fahrtrichtung (F) anschließenden Transporteinheit (4) und ist mit einem Stellsystem (7) zum bedarfsweisen Verstellen seiner Ausrichtung verbunden.

Um auch bei Verwendung unterschiedlicher Transporteinheiten mit unterschiedlichen Außengeometrien stets eine optimale Stellung des Luftleitblechs ohne menschliches Eingreifen zu gewährleisten, sind der Transporteinheit (4) Geometriedaten (11) über deren Außengeometrie und/oder Lagedaten (12) zugeordnet, die zumindest bei einem Wechsel der Transporteinheit (4) abrufbar und an eine Steuereinheit (22) weiterleitbar sind. Die Steuereinheit (22) wandelt die Geometrie- und/oder Lagedaten in Stellbefehle für das Stellsystem (7) um.

## Beschreibung

Die Erfindung betrifft eine Vorrichtung der im Oberbegriff des Anspruchs 1 genannten Art, also eine Vorrichtung zur strömungsoptimierten Ausrichtung eines Luftleitkörpers, der den Luftfluss zwischen einem Fahrzeug und einer sich in Fahrtrichtung anschließenden Einheit leitet, wobei die Vorrichtung ein Stellsystem zum bedarfsweisen Verstellen des Luftleitkörpers umfasst.

Die Erfindung liegt insbesondere auf dem Gebiet der Lastkraftwagen- und Transporttechnik. Bei einer solchen Technik ist das Fahrzeug als Lastkraftfahrzeug und die Einheit als Transporteinheit ausgebildet. Unter dem Begriff Transporteinheit ist im Rahmen der vorliegenden Erfindung eine mit einer selbstfahrenden Zugeinrichtung (Zugmaschine) eines Lastkraftfahrzeugs verbundene und/oder von dieser transportierbare Einheit zu verstehen. Dies kann eine auf eigenen Rädern fahrende Einheit, wie zum Beispiel ein Auflieger oder Anhänger sein, die in an sich bekannter Weise mit der Zugeinrichtung verbunden ist. Die Transporteinheit kann aber auch ein Container oder Transportbehälter mit vorgegebener Außengeometrie sein, der sich in bestimmter Lage und Position auf einer Ladefläche der Zugeinrichtung befindet.

In der deutschen Offenlegungsschrift DE 26 16 948 A1 ist ein zweiteiliger Fahrzeug-Spoiler beschrieben, dessen fahrbahnnaher, verstellbarer Teil bei relativ langsamer Geschwindigkeit von der Fahrbahn weggeschwenkt ist und der sich mit zunehmender Geschwindigkeit aufgrund des Fahrtwindes ausschwenkt.

In der deutschen Offenlegungsschrift DE 38 28 752 A1 ist eine weiterentwickelte Einrichtung zur Verstellung eines Fahrzeug-Spoilers beschrieben, die unter Auswertung kontinuierlich erfasster Betriebsparameter (zum Beispiel Geschwindigkeit, Beschleunigung und Kurvenfahrt) des Fahrzeugs den Spoiler so verstellt, dass stets eine optimale Straßenlage des Fahrzeugs gewährleistet ist.

Die deutsche Offenlegungsschrift DE 38 23 161 A1 beschreibt eine zwischen Fahrerhaus und sich anschließendem Auflieger angeordnete Windleiteinrichtung. Um auch zwischen Fahrerhäusern und/oder Aufliegern mit sehr unterschiedlichen Geometrien werksseitig einfach ein einheitliches Erscheinungsbild mit gleichen Strömungsverhältnissen zu realisieren, ist ein Bausatz sich windschlüpfrig und gestalterisch ergänzender einheitlicher fahrerhausseitiger verstellbarer Windleitflügel bzw. Windleitbleche sowie verschiedener Zwischenelemente vorgesehen. Aus diesem Bausatz erfolgt bei der Fahrzeugmontage werksseitig eine Auswahl gemäß der vorliegenden Geometrievarianten.

Eine gattungsgemäße Vorrichtung ist in der europäischen Patentanmeldung EP 1 031 497 A2 beschrieben, die eine Mechanik zur Verstellung eines Luftleitbleches betrifft, das auf einem Fahrzeugdach, zum Beispiel dem Dach einer LKW-Zugmaschine, angeordnet ist. Um die Stellung des Luftleitbleches an Anhänger mit unterschiedlichen Geometrien möglichst preisgünstig anpassen zu können, sieht die dort beschriebene Vorrichtung eine elektrische Stelleinrichtung vor, die eine Spindel, eine Spindelmutter und eine die Spindelmutter mit dem Luftleitblech verbindende Stange umfasst. Die Rotation der Spindel ist vom Fahrerhaus der Zugmaschine aus steuerbar, so dass der Fahrer die Stellung des Luftleitblechs manuell verändern kann. Dabei kann eine Anzeige im Fahrerhaus die aktuelle Stellung des Luftleitblechs anzeigen.

Bei dieser relativ flexibel und komfortabel an unterschiedliche Geometrien von Anhängern/Aufliegern anpassbaren Vorrichtung hängt es sehr von der Erfahrung und der Gewissenhaftigkeit des Fahrers oder des zuständigen Personals ab, dass sich das Luftleitblech in strömungsoptimierter Stellung befindet. Versäumt das Personal eine (optimale) Justage der Luftleitblechstellung, wirkt sich dies unmittelbar auf die Aerodynamik des Gesamtsystems (zum Beispiel dem C_{W}-Wert) und damit unter anderem auf den Kraftstoffverbrauch und die Fahrtgeräuschentwicklung nachteilig aus. Die Vermeidung derartiger Versäumnisse erfordert einen verstärkten Schulungs- und Überwachungsaufwand, den es aber insbesondere aus Kostengründen ebenfalls möglichst zu vermeiden gilt.

Der vorliegenden Erfindung liegt nun die Aufgabe zugrunde, eine Vorrichtung der eingangs genannten Art so weiterzubilden, dass auch bei Verwendung unterschiedlicher Transporteinheiten mit unterschiedlichen Außengeometrien stets eine optimale Stellung des Luftleitblechs gewährleistet ist.

Erfindungsgemäß wird diese Aufgabe durch eine Vorrichtung mit den Merkmalen des Patentanspruchs 1 gelöst.

Demgemäß wird eine Vorrichtung zur strömungsoptimierten Ausrichtung eines Luftleitkörpers vorgeschlagen, der den Luftfluss zwischen einem Fahrzeug und einer sich in Fahrtrichtung anschließenden Einheit leitet, wobei die Vorrichtung ein Stellsystem zum bedarfsweisen Verstellen des Luftleitkörpers umfasst, wobei der Einheit Geometriedaten über deren Außengeometrie und/oder Lagedaten zugeordnet sind, die Geometrie- und/oder die Lagedaten zumindest bei einem Wechsel der Einheit abrufbar und an eine Steuereinheit weiterleitbar sind und die Steuereinheit die Geometrie- und/oder Lagedaten in Stellbefehle für das Stellsystem umwandelt.

Die der vorliegenden Erfindung zugrunde liegende Idee besteht unter anderem darin, die optimale Einstellung bzw. Ausrichtung des Luftleitsystems dadurch aus dem menschlichen Verantwortungsbereich zu nehmen, dass eine automatische Anpassung an infolge eines Wechsels der (Transport-)Einheit geänderte aerodynamische Verhältnisse erfolgt. Dazu erhält das Stellsystem Stellbefehle, die von der Steuereinheit unmittelbar aus Geometriedaten über die Außengeometrie der aktuellen (Transport-)Einheit und/oder deren Position oder Lage, zum Beispiel auf einer Ladefläche der Zugmaschine, generiert werden.

Ein wesentlicher Vorteil der Erfindung besteht damit darin, dass eine optimale Einstellung des Luftleitsystems zuverlässig und von menschlichen Bedienfehlern oder Versäumnissen unabhängig gewährleistet ist. Der Fahrer bzw. anderes Personal werden von dieser Aufgabe - die für die wirtschaftliche Rentabilität und die Umweltverträglichkeit des Fahrzeugs von erheblicher Bedeutung ist - entlastet.

Vorteilhafte Ausgestaltungen und Weiterbildungen der Erfindung sind den Unteransprüchen sowie der Beschreibung unter Bezugnahme auf die Zeichnung entnehmbar.
Die Erfindung liegt insbesondere auf dem Gebiet der Lastkraftwagen- und Transporttechnik.

In einer typischen Ausgestaltung der Erfindung ist das Fahrzeug als Zugmaschine eines Lastkraftfahrzeugs ausgebildet und ist die sich in Fahrtrichtung anschließende Einheit als Transporteinheit der Zugmaschine ausgebildet.

In einer dazu alternativen Ausgestaltung ist das Fahrzeug als Personenkraftfahrzeug ausgebildet und ist die sich in Fahrtrichtung anschließende Einheit als Spoiler, als Schiebedach, als Windschott oder dergleichen ausgebildet ist.

Die Informationen über die Geometrie (Geometriedaten) und /oder die Daten über die Lage und Position der Transporteinheit können in vielfältiger Weise an die Steuereinheit - zum Beispiel kabelgebunden oder über Funk, aktiv oder passiv - übertragen werden. Die Transporteinheit kann dazu eine auslesbare Speichereinrichtung aufweisen, in der für die Transporteinheit charakteristische Daten abgelegt sind und die zum Beispiel von einem Barcode oder einem elektronischen permanent sendenden Sender gebildet ist.

Eine in diesem Zusammenhang besonders vorteilhafte Ausgestaltung der Erfindung sieht vor, dass der Speicher als Transponder ausgebildet ist. Transponder sind in der Kraftfahrzeugtechnik bewährte, zuverlässige Speichermedien ohne eigene Energieversorgung, die bei Abfrage die Energie des empfangenen elektromagnetischen Abfragesignals nutzen, um ein - zum Beispiel mit den gewünschten Daten codiertes - Antwortsignal auszusenden.

Die Daten können aber auch per Kabel weitergeleitet werden, beispielsweise durch eine Kabelverbindung, die bei dem elektrischen Anschluss eines Anhängers oder Aufliegers zwangsweise geschaffen wird.

Es ist auch denkbar, die Transporteinheit nur jeweils mit einem eindeutigen Identifizierungsmerkmal auszustatten und die zugehörigen Geometriedaten in einem fahrzeugseitigen Speicher abzulegen und bedarfsweise auszulesen.

Nach einer insbesondere bei einer Zugmaschine mit eigener Ladefläche bevorzugten Ausgestaltung der Erfindung ist vorgesehen, dass die Zugmaschine Sensoren zur Bestimmung der Geometriedaten der Transporteinheit und/oder Sensoren zur Bestimmung der Lage und Position der Transporteinheit aufweist.

Die Erfindung wird nachfolgend anhand der in den schematischen Figuren der Zeichnung angegebenen Ausführungsbeispiele näher erläutert. Es zeigen dabei:
- Fig. 1: eine Zugmaschine mit einem Auflieger und einer erfindungsgemäßen Vorrichtung;
- Fig. 2: eine Zugmaschine mit einer Ladefläche und einer erfindungsgemäßen Vorrichtung.

In den Figuren der Zeichnung sind gleiche bzw. funktionsgleiche Elemente und Signale - sofern nichts anderes angegeben ist - mit denselben Bezugszeichen versehen worden.

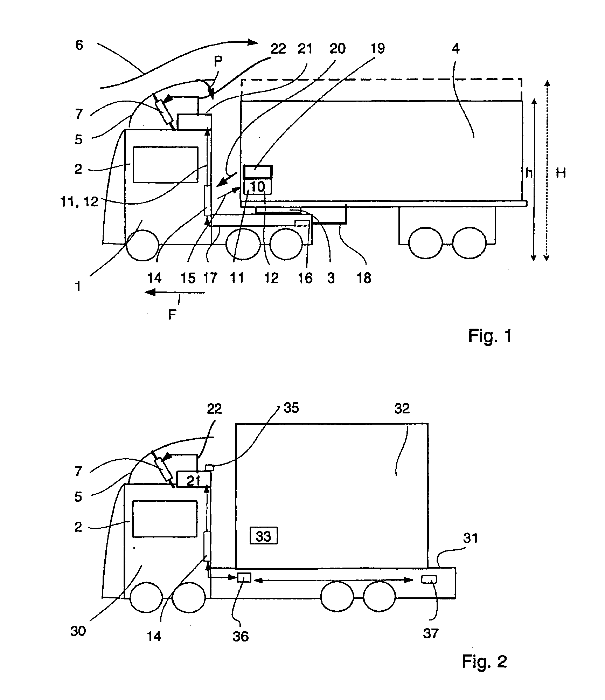

Figur 1 zeigt ein erstes Ausführungsbeispiel eines mit einer erfindungsgemäßen Vorrichtung ausgestatteten Kraftfahrzeugs.

Figur 1 zeigt eine Zugmaschine 1 mit einem Fahrerhaus 2 und einer Kupplungsvorrichtung 3 für einen sich in Fahrtrichtung F anschließenden Auflieger. Der Auflieger wird nachfolgend verallgemeinernd auch als Transporteinheit bezeichnet und ist eine Beispiel für eine in Fahrtrichtung F anschließende Einheit 4. Zugmaschine und Auflieger sind Bestandteil eines Lastkraftfahrzeugs (LKWs). Auf dem Dach des Fahrerhauses 2 ist ein Luftleitblech (Luftleitkörper) 5 angeordnet, das die bei Fahrt auftretende Luftströmung 6 zwischen der Zugmaschine 1 und der Transporteinheit leitet. Zur strömungsoptimierten Ausrichtung des Luftleitkörpers 5 ist ein Stellsystem 7 zum bedarfsweisen Verstellen des Luftleitkörpers 5 vorgesehen, um so den Luftfluss möglichst verwirblungsfrei vom Fahrerhaus 2 auf den Auflieger überzuführen. Bei dem Stellsystem 7 kann es sich zum Beispiel um ein hydraulisch, pneumatisch, elektrisch oder dergleichen betriebenes Hub- und Senkverstellsystem handeln.

Der Auflieger ist mit einer Speichereinrichtung 10 versehen, in der Geometriedaten 11 und Positionsdaten 12 abgelegt sind. Vorteilhafterweise sind die Daten in einer Tabelle (tablelook-up) der Speichereinrichtung 10 abgelegt. Die Speichereinrichtung 10 ist vorteilhafterweise als Permanentspeicher ausgebildet, zum Beispiel als RAM, SRAM, SDRAM, etc..

Die gespeicherten Daten 11, 12 repräsentieren bei ordnungsgemäßer Verbindung über die Kupplung 3 die Außengeometrie des Aufliegers, insbesondere dessen Profil und äußeren Abmaße, zum Beispiel dessen Höhe h, und dessen Position relativ zum Fahrerhaus 2.

Diese Daten 11, 12 sind von einer Abfrageeinrichtung 14 abfragbar, die an der Rückseite des Fahrerhauses 2 angeordnet ist. Die Abfrageeinrichtung 14 ist zum Beispiel als Sender ausgebildet, der bei Auslösung ein Abfragesignal 15 aussendet. Die Auslösung kann zum Beispiel durch einen weiteren Sensor 16 erfolgen, der die Präsenz eines Aufliegers erkennt. Somit erkennt der Sensor 16, wenn nach Entfernen des bisherigen Aufliegers anschließend erneut wieder ein Auflieger angekuppelt wird, und generiert zu diesem Zeitpunkt ein Auslösesignal 17. Alternativ könnte das Auslösesignal 17 auch generiert werden, wenn zum Beispiel eine notwendige elektrische Verbindung 18 - zum Beispiel für die Beleuchtung des Aufliegers - gesteckt wird oder jedes Mal, wenn der Motor der Zugmaschine 1 angelassen wird.

Das von der Abfrageeinrichtung 14 ausgesendete Abfragesignal 15 gelangt zu einem Transponder 19, der die empfangene Sendeleistung nutzt, um ein Antwortsignal 20 zu generieren und auszusenden, das die Daten der Speichereinrichtung 10 enthält. Die Abfrageeinrichtung 14 leitet diese Daten 11, 12 an eine Steuereinheit 21 weiter, die die Geometrie- und/oder Lagedaten 11, 12 in Stellbefehle 22 für das Stellsystem 7 umwandelt.

Die Steuereinheit 21 ist typischerweise Bestandteil einer programmgesteuerten Einrichtung, zum Beispiel eines Mikroprozessors oder eines Mikrocontrollers. Denkbar wäre selbstverständlich auch, die Funktion der Steuereinheit 21 als Logikschaltung, zum Beispiel als FPGA- oder PLD-Schaltung, zu implementieren. Die Steuereinheit 21 kann Bestandteil eines eigenen, dem Stellsystem 7 zugeordneten Steuergeräts sein. Alternativ wäre auch denkbar, dass die Funktion der Steuereinheit 21 von einem anderen Steuergerät, zum Beispiel dem Motorsteuergerät, erfüllt wird.

Im Beispiel entsprechend Figur 1 sei angenommen, dass ein zuvor transportierter Auflieger, der gestrichelt angedeutet ist, eine größere Höhe H hatte, als ein neu angekuppelter Auflieger. Nach dem Austausch gegen den jetzt angekuppelten Auflieger ist die aktuelle Höhe h geringer. Die Steuereinheit 21 wandelt die Geometrie- und/oder die Lagedaten 11, 12 in Stellbefehle 22 um, die das Luftleitblech 5 auf die geringere Höhe h ausrichten, also das Luftleitblech 5 entsprechend in Richtung des Pfeils P absenken.

Figur 2 zeigt ein zweites Ausführungsbeispiel eines mit einer erfindungsgemäßen Vorrichtung ausgestatteten Kraftfahrzeugs.

Figur 2 zeigt eine Variante, bei der die Zugmaschine 30 eine eigene Ladefläche 31 aufweist, auf der eine als Container 32 ausgebildete Transporteinheit abgestellt und fixiert ist. Der Container 32 ist mit einem als Speichereinrichtung ausgebildeten Transponder 33 ausgestattet. In der Speichereinrichtung 33 sind in vorbeschriebener Weise Daten über die Geometrie des Containers 32 abgespeichert. Diese Daten sind - in entsprechender Weise wie bei dem Beispiel in Figur 1 - durch die Abfrageeinrichtung 14 wieder auslesbar und an die Steuereinheit 21 weiterleitbar.

Zusätzlich sind ein Sensor 35 am Fahrerhaus 2, der die Höhe des Containers 32 erfasst, und Sensoren 36, 37 auf der Ladefläche 31 dargestellt, die die Position und Lage der Transporteinheit 31 zusätzlich oder zur Überprüfung/Verifikation der von der Abfrageeinrichtung 14 empfangenen Daten erfassen. Die Abfrageeinrichtung 14 leitet das Antwortsignal 20 des Transponders 33 und gegebenenfalls die Signale der Sensoren 35 - 37 an die Steuereinheit 21 weiter, die die Geometrie- und/oder die Lagedaten in Stellbefehle 22 für das Stellsystem 7 umwandelt.

Im Beispiel entsprechend Figur 2 ist die jetzt aktuelle Höhe des Containers 32 geringer als eine zuvor transportierte Transporteinheit 32. Die Steuereinheit 21 wandelt die Geometrie- und/oder Lagedaten in Stellbefehle 22 derart um, dass das Luftleitblech 5 entsprechend abgesenkt wird.

Obgleich die vorliegende Erfindung vorstehend anhand eines bevorzugten Ausführungsbeispiels beschrieben wurde, ist sie darauf nicht beschränkt, sondern auf vielfältige Art und Weise modifizierbar.

So sei die Erfindung nicht notwendigerweise auf Zugfahrzeuge beschränkt, sondern lässt sich selbstverständlich auf beliebige Fahrzeuge, insbesondere auf beliebige Kraftfahrzeuge, erweitern. Es ist die Erfindung auch für den Einsatz bei Personenkraftfahrzeugen vorteilhaft einsetzen. Dabei kann zum Beispiel das erfindungsgemäße Luftleitsystem zur automatischen Ausrichtung eines Luftleitkörpers bezüglich eines Windschotts, eines Spoilers, eines Schiebedachs, etc. bei einem Personenkraftfahrzeug verwendet werden.

## Patentansprüche

1. Vorrichtung zur strömungsoptimierten Ausrichtung eines Luftleitkörpers (5), der den Luftfluss (6) zwischen einem Fahrzeug (1) und einer sich in Fahrtrichtung (F) anschließenden Einheit (4) leitet, mit einem Stellsystem (7) zum bedarfsweisen Verstellen des Luftleitkörpers (5), **dadurch gekennzeichnet, dass**
- der Einheit (4) Geometriedaten (11) über deren Außengeometrie und/oder Lagedaten (12) zugeordnet sind,
- die Geometrie- und/oder die Lagedaten (11, 12) zumindest bei einem Wechsel der Einheit (4) abrufbar und an eine Steuereinheit (22) weiterleitbar sind und
- die Steuereinheit (22) die Geometrie- und/oder Lagedaten in Stellbefehle für das Stellsystem (7) umwandelt.

2. Vorrichtung nach Anspruch 1,
**dadurch gekennzeichnet,**
**dass** das Fahrzeug (1) als Zugmaschine (1) eines Lastkraftfahrzeugs ausgebildet ist und die sich in Fahrtrichtung (F) anschließende Einheit (4) als Transporteinheit (1) der Zugmaschine (1) ausgebildet ist.

3. Vorrichtung nach Anspruch 1,
**dadurch gekennzeichnet,**
**dass** das Fahrzeug (1) als Personenkraftfahrzeug (1) ausgebildet ist und die sich in Fahrtrichtung (F) anschließende Einheit (4) als Spoiler, als Schiebedach oder als Windschott ausgebildet ist.

4. Vorrichtung nach einem der vorstehenden Ansprüche,
**dadurch gekennzeichnet,**
**dass** eine elektronische Speichereinrichtung vorgesehen ist, in der die Geometriedaten (11) und/oder die Lagedaten (12) gespeichert sind.

5. Vorrichtung nach Anspruch 4,
**dadurch gekennzeichnet,**
**dass** die elektronische Speichereinrichtung als Transponder (19) ausgebildet ist.

6. Vorrichtung nach einem der vorstehenden Ansprüche,
**dadurch gekennzeichnet,**
**dass** das Fahrzeug (1) Sensoren (35) zur Bestimmung der Geometriedaten der Einheit (4) und/oder Sensoren (36, 37) zur Bestimmung der Lage und Position der Einheit (32) aufweist.
